# EUROPEAN PATENT APPLICATION

(11) **EP 4 837 865 A1**
(43) Date of publication of application: **11.11.2026**
(21) Application number: 26176085.4
(22) Date of filing: 01.05.2026
(51) Int. Cl.: B65G 21/14, B07B 1/00, B65G 21/10

(54) **FOLDING CONVEYOR ASSEMBLY**

(30) Priority: 06.05.2025 GB 202506860
(71) Applicant: Terex GB Limited, Dungannon County Tyrone BT71 4DR (GB)
(72) Inventor: CATTERSON, Ryan, Dungannon, BT71 4DR (GB); JOHNSTON, Lee, Lisbellaw, BT94 53Y (GB)
(74) Representative: FRKelly

(57) **Abstract**

A conveyor assembly for a material processing apparatus comprises a conveyor having a base section and a head section that is pivotable with respect to the base section, the base section being pivotable with respect to a base. A link structure is coupled between the base and the head section, and an actuator is coupled between the base section and the head section. The configuration is such that, in response to pivoting head section by the actuator, the base section and the link structure pivot in order to operate the conveyor between deployed and non-deployed states.

## Description

### FIELD OF THE INVENTION

This invention relates to folding conveyors. The invention relates particularly, but not exclusively, to folding conveyors for use with material processing apparatus, and to material processing apparatus including folding conveyors.

### BACKGROUND TO THE INVENTION

It is known for material processing apparatus, such as aggregate screening and/or crushing apparatus, to include conveyors that can fold to facilitate transport of the apparatus. Conventionally, a combination of linkages and actuators (typically hydraulic rams) is provided for folding and unfolding the conveyor between its working and transport states.

For reasons of simplicity and cost, it is desirable to reduce the number of components that are required to fold conveyors between their working and transport states. For example, reducing the number of actuators that are required not only reduces cost, but also simplifies the control infrastructure and process that are required to operate the actuators to fold and unfold the conveyor.

### SUMMARY OF THE INVENTION

From one aspect, the invention provides a conveyor assembly comprising: a base; a conveyor having a base section and a head section, the head section being pivotable with respect to the base section about a first axis, the base section being pivotable with respect to the base about a second axis that is spaced apart from the first axis; link means coupled between the base and the head section and being pivotable with respect to the base about a third axis and pivotable with respect to the head section about a fourth axis, the third and fourth axes being spaced apart from each other and from the first and second axes; and actuating means operable to pivot one of the head section, the base section or the link means about the first, second or third axis respectively, the conveyor assembly being configured such that, in response to pivoting of said one of the head section, the base section or the link means by said actuating means, the others of the head section, the base section and the link means pivot about the first, second or third axis respectively.

In preferred embodiments, the actuating means is operable to pivot the head section with respect to the base section about the first pivot axis, and wherein in response to pivoting of the head section by said actuating means, the link means and the base section are caused to pivot about the third and second axis. Preferably, said actuating means is coupled between said base section and said head section, preferably such that a line of action of said actuating means spaced apart from, and is located at only one side of, said first pivot axis during pivoting of the head section with respect to the base section about the first pivot axis.

Preferably, the base section is pivotably coupled to the head section, the head section is pivotably coupled to the link means, and the link means and base section are each pivotably coupled to the base, whereby the base section, head section and link means preferably form a pivotable linkage, and wherein the respective pivotable inter-coupling of the base section, head section and link means causes or allows pivoting movement of said others of the head section, the base section and the link means pivot about the first, second or third axis respectively in response to pivoting of said one of the head section, the base section or the link means by said actuating means.

Preferably, the conveyor is operable between a deployed state and a non-deployed state, and wherein in the deployed state the head section adopts a first angular disposition with respect to the base section, and the base section adopts a first angular disposition with respect to the base, and wherein in the non-deployed state the head section adopts a second angular disposition with respect to the base section, and the base section adopts a second angular disposition with respect to the base, the respective first and second angular dispositions being different from each other, and wherein the conveyor is operable between the deployed and non-deployed states by said pivoting of said one of the head section, the base section or the link means by said actuating means.

In preferred embodiments, the conveyor is operable between the deployed and non-deployed states by said pivoting of the head section by the actuation means.

Typically, said second, third and fourth axes are triangularly spaced apart.

Typically, said first axis is located between said second axis and said fourth axis, and/or between said third axis and said fourth axis.

In preferred embodiments, said third axis is located above said second axis, and is preferably located over the base section, more preferably in register or substantially in register with a first end of the base section, said first end being distal said head section.

Optionally, said third axis is located under the head section.

Preferably, the link means is of fixed length, at least during, or only during, pivoting movement of said others of the head section, the base section and the link means pivot about the first, second or third axis respectively in response to pivoting of said one of the head section, the base section or the link means by said actuating means. More particularly, the link means is of fixed length, at least during, or only during, operation of the conveyor between the deployed and non-deployed states.

Typically, the link means comprises one or more instance of any one or more of a bar, a beam, a frame, a flexible line, or any combination thereof.

In preferred embodiments, the link means comprises a rigid part and a second part, the rigid part being coupled to the base and the second part being coupled to the head section, wherein the second part comprises a non-rigid part, the non-rigid part being coupled directly or indirectly to the head section, and wherein the rigid part optionally comprises one or more instance of any one or more of a bar, a beam, or a frame, and the non-rigid part optionally comprises one or more flexible line, e.g. one or more rope, chain or wire.

Preferably, the second part of the link means includes a rigid or semi-rigid part coupled to the head section, the non-rigid part being coupled between said rigid or semi-rigid part of the second part and said rigid part of the link means, and wherein said rigid or semi-rigid part of the second part optionally comprises one or more bar, plate or other member.

Preferably, the rigid part of the link means is releasably fixable to the base section, conveniently by one or more locking device or other releasable fixing device(s).

Preferably, the rigid part of the link means is releasably fixable to the base section when the conveyor is in the deployed state.

Preferably, the rigid part of the link means includes a locking part that is releasably fixable to the base section, and wherein said locking part is optionally extendible, for example being telescopically extendible or otherwise configured to be length adjustable.

Optionally, the assembly further includes one or more length adjustment devices for adjusting the length of the link means.

In typical embodiments, the head section is configured to pivot about said first axis in a first angular direction during operation of said conveyor from the deployed state to the non-deployed state, and in a second angular direction during operation of said conveyor from the non-deployed state to the deployed state, the second angular direction being opposite the first angular direction, and wherein, preferably, pivoting of the head section in the first angular direction involves movement of the head section in an upward direction, and pivoting of the head section in the second angular direction involves movement of the head section in a downward direction.

In typical embodiments, said base section is configured to pivot about said second axis in a first angular direction during operation of said conveyor from the non-deployed state to the deployed state, and in a second angular direction during operation of said conveyor from the deployed state to the non-deployed state, the second angular direction being opposite the first angular direction, and wherein, preferably, pivoting of the base section in the first angular direction involves movement of the base section in an upward direction, and pivoting of the base section in the second angular direction involves movement of the base section in a downward direction.

Typically, the deployed state corresponds to a working state of the conveyor, and the non-deployed state corresponds to a non-working or transport state of the conveyor.

Typically, the conveyor is pivotable with respect to the base about an axis that is preferably vertical or substantially vertical in use and which is preferably located at or adjacent an end of the conveyor, preferably such that the conveyor is pivotable with respect to the body between a first disposition in which it extends alongside the base, and a second disposition in which it projects outwardly from the base.

Preferably, said second and third axes are parallel, or substantially parallel, with each other.

Preferably, said first and fourth axes are parallel, or substantially parallel, with each other, and wherein the first and fourth axes are preferably parallel, or substantially parallel, with said second and third axes.

Preferably, said actuating means comprises at least one powered actuator, preferably at least one powered linear actuator, e.g. at least one hydraulic ram.

From another aspect the invention provides a material processing apparatus comprising a conveyor assembly of said one aspect of the invention, wherein said material processing apparatus, conveniently a body of the material processing apparatus, provides or incorporates the base of the conveyor assembly.

Typically, the conveyor is pivotable with respect to the material processing apparatus, in particular with respect to the body of the material processing apparatus, between a disposition in which, in the deployed state, the conveyor is arranged to convey material between first and second locations on the material processing apparatus, and a different disposition in which, in the deployed state, the conveyor is arranged to convey material from a location on the material processing apparatus to an external location off the material processing apparatus, or to convey material from an external location off the material processing apparatus to a location on the material processing apparatus.

Further advantageous aspects of the invention will be apparent to those ordinarily skilled in the art upon review of the following description of specific embodiments and with reference to the accompanying drawings.

### BRIEF DESCRIPTION OF THE DRAWINGS

Embodiments of the invention are now described by way of example and with reference to the accompanying drawings in which like numerals are used to denote like parts and in which:
Figure 1 is a perspective view of a material processing apparatus embodying one aspect of the invention and including a conveyor embodying another aspect of the invention, the conveyor being shown in a deployed or working state;
Figure 2 is a perspective view of the material processing apparatus of Figure 1 with the conveyor being shown in a non-deployed or transport state;
Figure 3 is a side view of the conveyor in the non-deployed or transport state;
Figure 4 is an enlarged sectioned side view of part of the conveyor in the non-deployed or transport state;
Figure 5 is a side view of the conveyor in the deployed or working state;
Figure 6 is an enlarged sectioned side view of part of the conveyor in the deployed or working state;
Figure 7 is a side view of an alternative embodiment of the conveyor in the non-deployed or transport state; and
Figure 8 is a side view of the embodiment of Figure 7 in the deployed or working state;
Figure 9 is an enlarged side view of part of an alternative embodiment of the conveyor shown in the non-deployed or transport state; and
Figure 10 is an enlarged side view of part of the conveyor of Figure 9 shown in the deployed or working state.

### DETAILED DESCRIPTION OF THE DRAWINGS

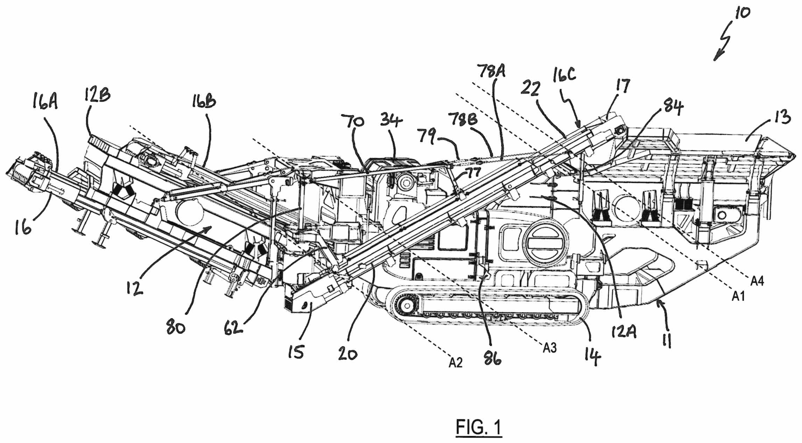

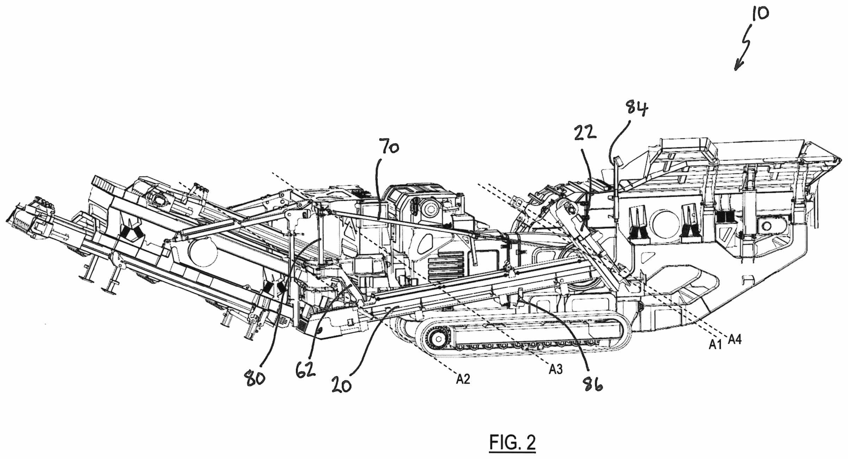

Referring now to Figures 1 and 2 of the drawings there is shown, generally indicated as 10, a material processing apparatus embodying one aspect of the invention. Depending on the embodiment, the apparatus 10 may be configured to perform any one or more of a plurality of processes, such as feeding, conveying, screening, separating, crushing, breaking, recycling, shredding, demolition and/or washing, on one or more types of aggregate or other material, for example rocks, stones, gravel, sand and/or soil, or any other material, especially but not exclusively, material that is quarried, mined, excavated or requires breaking, recycling or sorting. To this end, the apparatus 10 typically includes one or more material processing unit 12 configured to perform one or more of the foregoing processes. In the illustrated embodiment, apparatus 10 includes a first material processing unit 12A, which in this example is a crusher, and a second material processing unit 12B, which in this example is a screen apparatus (which is usually referred to as a screen or screen box). It will be understood that in alternative embodiments, there may be only one material processing unit 12, or there may be more than two, and that the, or each, unit may be of any type depending on the application. Moreover, the invention is not limited to use with material processing apparatus and may be used with other apparatus, e.g. machines, vehicle or plant, in particular machines, vehicles or plant that include conveyor(s), or stand-alone conveyor apparatus, e.g. comprising one or more conveyor mounted on a base, chassis or other support structure.

The apparatus 10 comprises a body or chassis 11 that carries the (or each) material processing unit 12. The chassis 11 may also carry or support one or more other components that facilitate use of the material processing unit(s) 12 and/or the apparatus 10 as a whole, e.g. conveyor(s), feeder(s), actuator(s) and power system(s), examples of which are described in more detail hereinafter. In typical embodiments, the apparatus 10 includes an internal combustion engine (ICE) 34, typically a diesel engine for providing power to the apparatus 10. The engine 34 may be mounted on the chassis 11 in any conventional manner. The apparatus 10 typically includes a hydraulic system comprising one or more hydraulic actuator and/or one or more hydraulic motor for powering and/or operating components of the apparatus 10 as applicable. The hydraulic system may include other hydraulic circuitry and components, e.g. valve(s), pump(s), reservoir(s) and so on, as required by the embodiment. The hydraulic system may be powered by the ICE 34 (e.g. mechanically or electrically via a generator) and/or by any other available power source, e.g. from one or more battery pack(s) included in an electrical power system. The apparatus 10 typically include a feeder unit 13, or hopper, for delivering material directly or indirectly to the material processing unit(s) 12. In the illustrated embodiment, the feeder 13 feeds material to be processed to the crusher 12A. In typical embodiments, the apparatus 10 is mobile and may include ground-engaging wheel(s) and/or track(s) 14 for this purpose.

The apparatus 10 includes at least one conveyor 16 conveying material between components of the apparatus 10 and/or for outputting material from the apparatus 10. In the illustrated embodiment, the apparatus 10 comprises a discharge conveyor 16A for outputting material that has passed through the screen 12B, e.g. to a stockpile, or to another machine or apparatus, and a feed conveyor 16B for delivering crushed material from the crusher 12A to the screen 12B. The apparatus 10 further includes a conveyor 16C which, in a first mode of use (as shown in Figure 1), is arranged to deliver material that fails to pass through the screen 12B back to the feeder 13 so that it is fed into the crusher 12A. In this mode of use, the conveyor 16C may be referred to as a recirculating conveyor. Optionally, the conveyor 16C is operable in a second mode of use (not illustrated) in which it is arranged to output material (in particular material that has failed to pass through the screen 12B in this example) from the apparatus 10, e.g. to a stockpile, or to another machine or apparatus. In the second mode, the conveyor 16C may be referred to as a discharge conveyor. To facilitate the first and second modes of use, the conveyor 16C may be pivotable (by means of any suitable pivoting coupling(s)) at its feed end with respect to the main body of the apparatus 10 about an axis that is vertical or substantially vertical in use, or otherwise be configured to pivot or swivel with respect to the body 11. The preferred configuration is such that the conveyor 16C is able to pivot with respect to the body 11 between a first disposition (illustrated in Figure 1) in which it extends alongside the body 11, and a second disposition (not illustrated) in which it extends outwardly from the body 11.

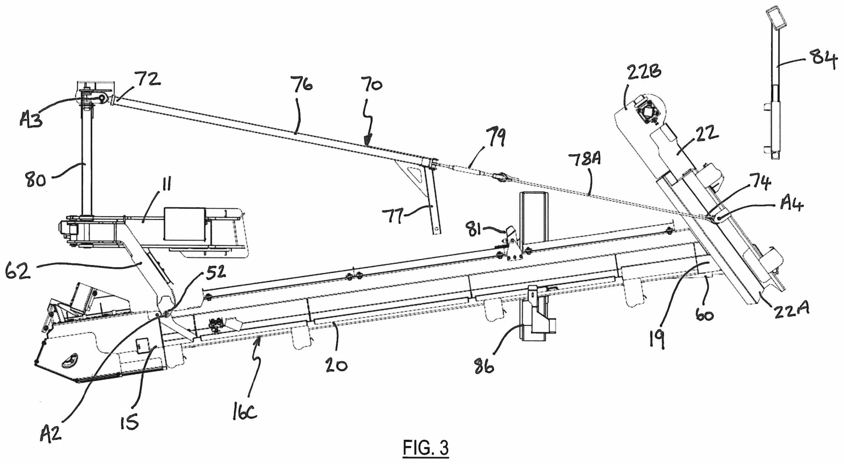

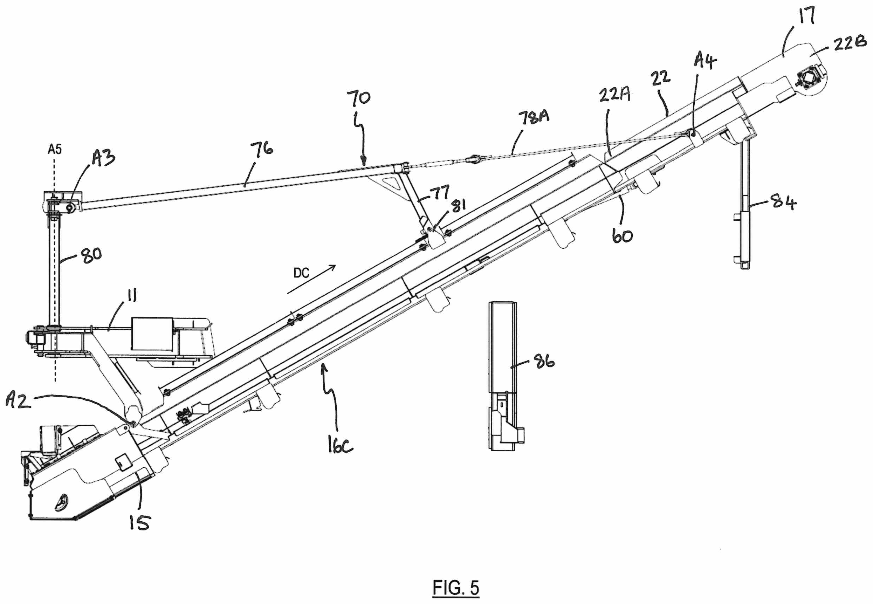

As is described in more detail hereinafter, the conveyor 16C forms part of a conveyor assembly, which embodies an aspect of the present invention. Other parts of the conveyor assembly may be provided on the apparatus 10, or other suitable base, as described in more detail hereinafter. The conveyor 16C is operable between a deployed state (Figures 1 and 5) and a non-deployed state (Figures 2 and 3), and may be referred to as a folding conveyor. The deployed state corresponds to a working state of the conveyor 16C (e.g. in the first or second modes of use), while the non-deployed state corresponds to a non-working state, in particular a state that facilitates transport of the apparatus 10. As is apparent from a comparison of Figures 1 and 2, in typical embodiments, the overall height of the apparatus 10 is lower when the conveyor 16C is in its non-deployed state, which facilitates transport. In alternative embodiments, there may be more or fewer conveyors 16, each conveyor being provided in any suitable location, typically at a side, the front or the rear or the apparatus 10, and any of which may embody the present invention.

Referring now also to Figures 3 to 6, a preferred embodiment of the conveyor 16C is described. The conveyor 16C comprises a base (or tail) section 20 and a head section 22 that is pivotable, or foldable, with respect to the base section 20. The preferred pivoting, or folding, movement of the head section 22 with respect to the base section 20 facilitates operation of the conveyor 16C between its deployed and non-deployed states as is described in further detail hereinafter.

The base section 20 includes a first end 15 (which in typical embodiments serves as the feed end and onto which material is therefore typically deposited during use) of the conveyor 16C, and the head section 22 includes a second end 17 (which in typical embodiments serves as the discharge end and from which material is therefore typically discharged during use) of the conveyor 16C. In typical embodiments, the conveyor 16C is incorporated into the apparatus 10 such that material produced by one or more material processing unit 12 can be directly or indirectly deposited onto the feed end 15. In the embodiment of Figures 1 and 2, the base section 20 is coupled the apparatus 10 at a location where material that has failed to pass through the screen 12B (which material is typically discharged from the top of one or more screen deck of the screen 12B) is directly or indirectly deposited on the feed end 15. When the conveyor 16C is in its deployed state and in its first mode of use (Figure 1), material deposited onto the feed end 15 is conveyed to the discharge end 17 from which it is discharged into the feeder 13. In alternative embodiments, the conveyor 16C may serve as an in-feed conveyor, whereby material is deposited onto the second end 17 and conveyed to the first end 15.

The conveyor 16C includes means for conveying material from the feed end 15 to the discharge end 17. In typical embodiments, the conveying means comprises a closed loop conveyor belt (not shown) and as such the conveyor 16C may be referred to as a belt conveyor. The conveyor sections 20, 22 together provide a support structure for the conveyor belt (or other conveying means as applicable). Each conveyor section 20, 22 may be configured in any conventional manner to support the conveying means and/or operation of the conveyor 16. Each conveyor section 20, 22 typically comprises a frame (or other support structure, e.g. one or more beam) for supporting the conveying means, and may include one or more other conveyor component(s) (e.g. roller(s), idler(s), pulley(s) and/or motor(s) as required) for supporting the conveying means and/or operation of the conveyor, all of which may take any suitable conventional form as would be apparent to a skilled person. Each frame, or other support structure, is rigid or substantially rigid and may be formed from any suitable material, typically steel or other metal(s).

The conveyor sections 20, 22 are connected together, end-to-end, to form the conveyor 16C, more particularly to form the support structure for the conveyor belt in preferred embodiments. The arrangement is such that, in use when the conveyor 16C is in its deployed state, material deposited onto the feed end 15 is conveyed along the base and head sections 20, 22 to the discharge end 17.

Each conveyor section 20, 22 has an end-to-end axis that is typically linear, or straight. In preferred embodiments, when the conveyor 16C is in its deployed state, the respective end-to-end axis of the conveyor sections 20, 22 are aligned with each other, and also with the end-to-end axis of the conveyor 16C (which may be referred to as the longitudinal axis of the conveyor 16C and which corresponds to the direction DC in which material is conveyed, in use, from the feed end 15 to the discharge end 17). The conveyor sections 20, 22 may be coplanar or substantially coplanar in the deployed state. In preferred embodiments, the end-to-end, or longitudinal, axis of the conveyor 16C (and therefore the conveyor 16C itself), when in the deployed state, is linear or substantially linear, i.e. straight. However, in some embodiments, the longitudinal axis, and therefore the conveyor 16C itself, may be curved or otherwise be non-linear in the deployed state. In any event, in the deployed state, the conveyor sections 20, 22 are arranged to provide a path between the feed end 15 and discharge end 17 along which material can be conveyed, which usually involves an arrangement whereby the conveyor sections are coplanar or substantially coplanar, or otherwise have relative angular dispositions that facilitate conveying material from the feed end 15 to the discharge end 17. In contrast, in the non-deployed state, the conveyor sections 20, 22 have different relative angular dispositions that typically prevent conveying material from the feed end 15 to the discharge end 17, and are usually non-coplanar with each other.

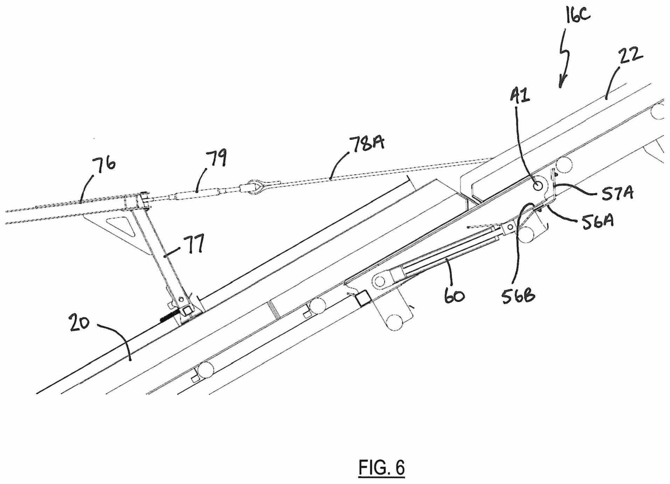

The conveyor sections 20, 22 are pivotably interconnected to allow relative pivoting movement between the conveyor sections 20, 22 about a first pivot axis A1, and in particular to allow the head section 22 to pivot, or fold, about axis A1 with respect to the base section 20. The pivot axis A1 is preferably perpendicular, or substantially perpendicular, to the end-to-end axes of the conveyor sections 20, 22. The pivot axis A1 is preferably perpendicular, or substantially perpendicular, to the end-to-end, or longitudinal, axis of the conveyor 16C when in the deployed state. In preferred embodiments, the pivot axis A1 extends transversely across the conveyor 16C, or transversely with respect to the conveyor sections 20, 22. The pivot axis A1 may be located at or adjacent the interface between the respective adjacent ends of the conveyor sections 20, 22. The specific location of the pivot axis A1 may be selected depending on the geometry of the conveyor 16C and its desired movement between the deployed and non-deployed states. For example, the head section 22 has a proximal end 22A that is proximal the base section 20 (at least when the conveyor 16C is in the deployed state) and a distal end 22B that is distal the base section 20 (at least when the conveyor 16C is in the deployed state), and in preferred embodiments the pivot axis A1 is spaced apart from the proximal end 22A in the longitudinal direction, is located between the proximal end 22A and the distal end 22B, preferably between the proximal end 22A and the midpoint between the proximal end 22A and the distal end 22B. This location of the pivot axis A1 facilitates the achieving the preferred disposition of the head section 22 in the non-deployed state as illustrated in Figures 2, 3 and 4. To facilitate the illustrated location of axis A1, the base section 20 may comprise one or more arm 23, or other part(s), that projects beyond the interface between the adjacent ends of the conveyor sections 20, 22 when the conveyor 16C is in the deployed state. Typically, first and second transversely spaced-apart arms 23 (only one of which is visible) are provided. In preferred embodiments, the pivot axis A1 is located below the top face of the conveyor 16C (at least when the conveyor 16C is in the deployed state) and as such in typical embodiments is located below the portion of the conveyor belt that conveys material in use. For example, with reference to Figure 6 in particular, the pivot axis A1 is located between the top and bottom of the conveyor 16C, where the top-to-bottom direction of the conveyor 16C is perpendicular to both the end-to-end direction and the transverse direction of the conveyor 16C. Locating the axis A1 in this manner means that as the head section 22 pivots with respect to the base section 20 during movement out of the deployed state, the length of the conveyor belt required to wrap around the conveyor 16C is reduced, or at least not increased, and as such the conveyor belt is not stretched. Stretching of the conveyor belt is undesirable as it can cause belt tracking problems and/or can dislodge the belt from its associated belt skirts (not shown). In contrast, locating the pivot axis A1 at or above the top face of the conveyor, in particular above the top portion of the belt, causes the required belt length to increase during folding and so causes the belt to stretch.

In preferred embodiments, the arrangement is such that the head section 22 pivots, or folds, upwardly (anticlockwise as viewed in the drawings) with respect to the base section 22 as the conveyor 16C is operated to adopt the non-deployed state from the deployed state, and pivots, or folds, downwardly with respect to the base section 22 as the conveyor 16C is operated to adopt the deployed state from the non-deployed state. In alternative embodiments the opposite arrangement may be implemented, i.e. the head section 22 may pivot downwardly with respect to the base section 22 when the conveyor 16C is adopting the non-deployed state, and upwardly with respect to the base section 22 when the conveyor 16C is adopting the deployed state. The angular extent to which the head section 22 pivots with respect to the base section 20 between the deployed and non-deployed states may be determined by the desired disposition of the head section 22 when the conveyor 16C is in the deployed state, which may vary from embodiment to embodiment. In the illustrated embodiment, the head section 22 pivots through more than 90° (more particularly between 90° -180°, preferably between 100°-170°) with respect to the base section 20 between the deployed and non-deployed states, but in alternative embodiments it may pivot through less than 90°, e.g. between 10°-90°. The specific angular range through which the head section 22 pivots may be selected to suit the application.

The pivotable or folding connection between the conveyor sections 20, 22 may comprise any suitable means, typically comprising one or more respective hinge or other pivot joint(s). In the illustrated embodiment, the head section 22 is connected to the base section 20 by pivot joint 50 (which may comprise first and second transversely spaced-apart pivot joints (only one of which is visible) and which together may be said to comprise a hinge) configured to allow relative pivoting movement between the base section 20 and the head section 22 about axis A1, and in particular to allow the head section 22 to pivot with respect to the base section 20 in a first angular direction (anticlockwise as viewed in Figures 1 to 6) during folding of the conveyor 16C (i.e. as the conveyor 16C is operated from the deployed state to the non-deployed state), and in a second, opposite angular direction (clockwise as viewed in Figures 1 to 6) during unfolding of the conveyor 16C (i.e. as the conveyor is operated from the non-deployed state to the deployed state). In preferred embodiments, the pivotable connection is configured to constrain the pivoting movement to the pivot axis A1. The pivot joint(s) 50 are conveniently provided on the arm(s) 23, and in the illustrated embodiment, a respective pivot joint 50 is provided on each arm 23.

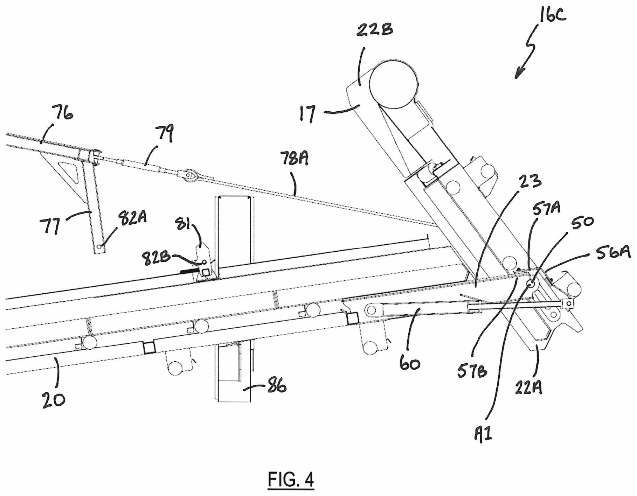

In preferred embodiments, the conveyor sections 20, 22 are configured to constrain, or limit, pivoting movement in the angular direction (i.e. clockwise as viewed in Figures 1 to 6) corresponding to unfolding of the conveyor 16C (or more particularly of the head section 22) in order to stop pivoting movement of the conveyor sections 20, 22 when the deployed state of the conveyor 16C is reached. To this end, the conveyor sections 20, 22 may include one or more stop. In the illustrated embodiment, and as can best be seen in Figures 4 and 6, the head section 22 is provided with at least one stop 56A that abuts with a respective stop 56B on the base section 20 to stop pivoting movement of the conveyor sections 20, 22 in the unfolding angular direction when the deployed state is reached. The illustrated stop 56A takes the form of a plate, but may take any convenient other form, e.g. any suitable member, protuberance, formation or surface. The illustrated stop 56B is provided by a surface of the conveyor section 20 but may take any convenient other form, e.g. any suitable member, protuberance, formation or surface. In preferred embodiments, the conveyor sections 20, 22 are configured to constrain, or limit, pivoting movement in the angular direction (i.e. anticlockwise as viewed in Figures 1 to 6) corresponding to folding of the conveyor 16C (more particularly of the head section 22) in order to stop pivoting movement of the conveyor sections 20, 22 when the non-deployed state of the conveyor 16C is reached. To this end, the conveyor sections 20, 22 may include one or more stop. In the illustrated embodiment, and as can best be seen in Figures 4 and 6, the head section 22 is provided with at least one stop 57A that abuts with a respective stop 57B on the base section 20 to stop pivoting movement of the conveyor sections 20, 22 in the folding angular direction when the non-deployed state is reached. The illustrated stop 57A takes the form of a plate, but may take any convenient other form, e.g. any suitable member, protuberance, formation or surface. The illustrated stop 57B is provided by a surface of the conveyor section 20 but may take any convenient other form, e.g. any suitable member, protuberance, formation or surface.

The conveyor 16C includes, or is coupled to, actuating means for pivoting the head section 22 with respect to the base section 20. The actuating means is preferably powered, e.g. hydraulically, electrically or pneumatically powered. The actuating means typically comprises one or more actuator 60, in particular one or more powered actuator, preferably one or more powered linear actuator, e.g. one or more hydraulic or pneumatic ram, and/or one or more electric linear actuator, preferably being double-acting. In some embodiments, a single actuator 60 may be provided for pivoting the head section 22. However, in typical embodiments, a plurality of actuators 60 acting in unison are provided. For example, in the illustrated embodiment, first and second transversely spaced-apart actuators 60 are provided (only one of which is visible), which act together pivot the head section 22 as described. Other conventional actuation means may be alternatively be used, e.g. a rotary motor with suitable transmission means such as a pulley system or rack and pinion mechanism. Any conventional operating means (not illustrated) may be provided for operating the actuator(s) 60, or other actuation means. The operating means typically includes a controller (not shown) having a user interface by which a user can cause the controller to operate the actuating means 60 and so to operate the conveyor 16C between its deployed and non-deployed states as is described in more detail hereinafter. The actuating means 60 may be connected to and powered by any suitable power system, e.g. an electrical, hydraulic or pneumatic power system, depending on its type, the power system conveniently being provided by the apparatus 10, but alternatively being a stand-alone power system. The controller may be of any conventional type e.g. electrical, electronic, computer-based, hydraulic, pneumatic or any combination of these types, typically depending on the type of actuator(s) and/or on the type of power system.

The actuating means may be coupled between the base section 20 and the head section 22, or between the head section 22 and another base, e.g. the body or chassis 11 of the apparatus 10. In preferred embodiments, the actuator(s) 60 are linear actuator(s), e.g. hydraulic ram(s), coupled between the base section 20 and the head section 22, and arranged such that linear extension/retraction of the actuator(s) 60 causes the pivoting movement of the head section 22 about axis A1. In the illustrated embodiment, the arrangement is such that extension of the actuator(s) 60 causes the head section 22 to pivot out of its deployed state (anticlockwise as viewed in the drawings), while retraction of the actuator(s) 60 causes the head section 22 to pivot into its deployed state (clockwise as viewed in the drawings), although in alternative embodiments an opposite arrangement may be implemented. In preferred arrangements, one end of the, or each, actuator 60 is coupled to the base section 20 (typically pivotably coupled or otherwise coupled to allow the end to rotate or swivel with respect to the base section 20), and the other end is coupled to the head section 22 (typically pivotably coupled or otherwise coupled to allow the end to rotate or swivel with respect to the head section 22). Alternatively, one end of the, or each, actuator 60 may be coupled (typically pivotably coupled) to the head section 22 and the other end may be coupled (typically pivotably coupled) to another base, e.g. the body or chassis 11 of the apparatus 10. In typical arrangements, the actuator(s) 60 are arranged such that the line of action along which the actuator applies force is spaced apart from the pivot axis A1 in order to effect pivoting movement of the head section 22 about the axis A1. In the illustrated embodiment, the arrangement is such that the, or each, actuator 60 is coupled to the head section 22 at a location between the axis A1 and the base section 22, and the line of action of the, or each, actuator 60, extends below the axis A1. In will be understood however that alternative arrangements may be used, for example depending on the location of the axis A1 and/or the angular direction in which the head section 22 pivots with respect to the base section 20. In any event, the preferred arrangement is such that operation of the actuator(s) 60 causes the head section 22 to pivot with respect to the base section 22 as described above. Advantageously, and as is described in more detail hereinafter, operation of the actuator(s) 60 to pivot the head section 22 with respect to the base section 20 effects operation of the conveyor 16C between the deployed and non-deployed states.

The base section 20 of the conveyor 16C is pivotable with respect to the body 11 of the apparatus 10 about a second pivot axis A2. The second pivot axis A2 is preferably parallel, or substantially parallel, to the first pivot axis A1. The pivot axis A2 is preferably perpendicular, or substantially perpendicular, to the end-to-end axes of the base section 20. The pivot axis A2 is preferably perpendicular, or substantially perpendicular, to the end-to-end, or longitudinal, axis of the conveyor 16C when in the deployed state. In preferred embodiments, the pivot axis A2 extends transversely across the conveyor 16C, or transversely with respect to the base section 20. The pivot axis A2 may be located at or adjacent the first end 15 of the base section 20. The specific location of the pivot axis A2 may be selected depending on the geometry of the conveyor 16C and/or on its desired movement between the deployed and non-deployed states. In the illustrated embodiment, the pivot axis A2 is located between the first end 15 of the base section 20 and the midpoint between the ends of the base section 20. The preferred arrangement is such that the base section 20 is pivotable about the second axis A2 in order to raise (corresponding to anticlockwise movement of the base section 20 as viewed in Figures 1, 2, 3 and 5) or lower (corresponding to clockwise movement of the base section 20 as viewed in Figures 1, 2, 3 and 5) the distal end 19 of the base section 20, i.e. the end 19 that is distal the first end 15 and to which the head section 22 is coupled). As such, the angular disposition of the base section 20, and therefore of the conveyor 16C, with respect to the body 11 of the apparatus 10 can be adjusted by pivoting the base section 20 about axis A2, which allows the base section 20, and therefore the conveyor 16C, to be angularly raised or lowered with respect to the body 11 of the apparatus 10.

The pivotable movement of the base section 20 with respect to the body 11 may be effected by any suitable means, typically one or more respective hinge or other pivot joint(s). In the illustrated embodiment, the base section 20 is coupled to a conveyor support 62, e.g. comprising a gantry or other structure, by pivot joint 52 (which may comprise first and second transversely spaced-apart pivot joints (only one of which is visible) and which together may be said to comprise a hinge) configured to allow relative pivoting movement between the base section 20 and the support 62 about axis A2. The conveyor support 62 may be part of, or otherwise fixed with respect to, the body 11. In preferred embodiments, the pivot joint 52 is configured to constrain the pivoting movement to the pivot axis A2.

In preferred embodiments, and as can be seen by way of example from a comparison of Figures 1 and 2, the conveyor 16C, in particular its base section 20, adopts a respective different angular disposition with respect to the body 11 in the deployed and non-deployed states. The different angular dispositions correspond to a relatively raised angular position (Figure 1) and a relatively lowered angular position (Figure 2). In preferred embodiments, the configuration is such that the conveyor 16C adopts the relatively raised angular position in its deployed state and the relatively lowered angular position in its non-deployed state. This is facilitated by the base section 20 pivoting with respect to the body 11 about axis A2 in the second angular direction (clockwise as viewed in Figures 1, 2, 3 and 5) during folding of the conveyor 16C (i.e. as the conveyor is operated from the deployed state to the non-deployed state), and in the first angular direction (anticlockwise as viewed in Figures 1, 2, 3 and 5) during unfolding of the conveyor 16C (i.e. as the conveyor is operated from the non-deployed state to the deployed state).

In the illustrated embodiment, causing the base section 20, and therefore the conveyor 16C, to adopt a relatively lowered position in the non-deployed state facilitates transport of the apparatus 10, not least because it facilitates reducing the overall height of the apparatus 10, whereas causing the base section 20, and therefore the conveyor 16C, to adopt a relatively raised position in the deployed state facilitates working of the apparatus 10, e.g. facilitates locating the discharge end 17 at the feeder 13 in order to discharge material into the feeder 13. In alternative embodiments, an opposite arrangement may be implemented, i.e. the base section 20 may adopted a relatively lowered position in the deployed state and a relatively raised positon in the non-deployed state, depending on the requirements of the application.

The angular extent to which the base section 20 pivots with respect to the body 11 between the deployed and non-deployed states may depend on the requirements of the application, but is typically less than 90°, e.g. between 10°-45°, and may for example depend on the desired disposition of the head section 22 when the conveyor 16C is in the deployed state, which may vary from embodiment to embodiment. In the illustrated embodiment, the head section 22 pivots through more than 90° (more particularly between 90°-180°) with respect to the base section 20 between the deployed and non-deployed states, but in alternative embodiments it may pivot through less than 90°, e.g. between 5°-45°. The respective angular disposition of the base section 20 in the deployed and non-deployed states may be selected to suit the application and may for example depend on the dimensions and/or locations of the other material processing components with which the conveyor 16C interacts in use. For example, in the deployed state the base section 20 may be disposed at an angle of approximately 40° with respect to horizontal, and at an angle of approximately 10° with respect to horizontal in the non-deployed state.

Link means 70 is coupled between the body 11, or other base, and the head section 22. The link means 70 supports the conveyor 16C, at least in the deployed state, advantageously in order to maintain the desired angular disposition of the conveyor 16C, or at least the base section 20, at least in the deployed state. In the embodiment of Figures 1 to 6, the link means 70 provides a tension force that holds the conveyor 16C, or at least the base section 22 at the desired angular disposition. In typical embodiments, the link means has a first end 72 coupled to a link support 80 and a second end 74 coupled to the head section 22. The link support 80 may take any suitable form, e.g. comprising a post in the embodiment of Figures 1 to 6 but otherwise comprising any other suitable support structure, and may be part of, or otherwise fixed with respect to, the body 11 (or other base), and/or may be integrally formed with, or otherwise fixed with respect to the conveyor support structure 62.

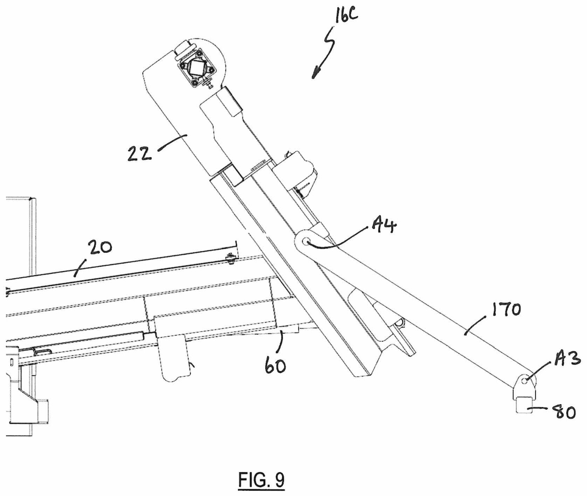

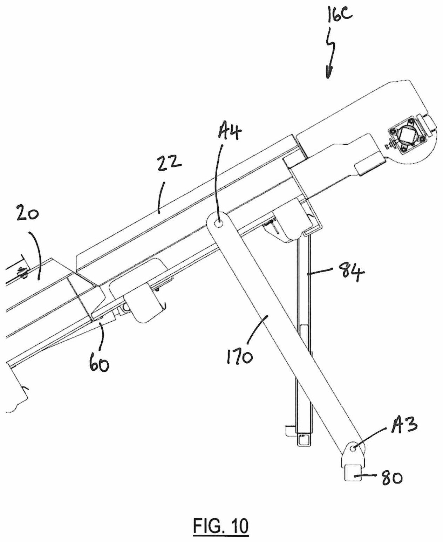

The link means 70 is coupled, conveniently at the first end 72, to the link support 80 for pivoting about a third pivot axis A3. The third pivot axis A3 is preferably parallel, or substantially parallel, with the first and second pivot axes A1, A2. In the embodiment of Figures 1 to 6, the location of the third pivot axis A3 is above the second pivot axis A2 and in register or substantially in register with the first end 15 of the conveyor 16C, or at least being located over the base section 20. However, in alternative embodiments (see for example Figures 9 and 10), the third pivot axis A3 may take other locations, and the link support structure 80 may be arranged accordingly. The specific location of the pivot axis A3 may for example be selected depending on the geometry of the conveyor 16C and/or on its desired movement between the deployed and non-deployed states. The coupling of the first end 72 to the link support structure 80 may take any convenient conventional form, e.g. comprising one or more respective hinge or other pivot joint(s) or any other coupling(s) that allows pivoting, rotational swivelling movement.

The link means 70 is coupled, conveniently at the second end 74, to the head section 22 for pivoting about a fourth pivot axis A4. The fourth pivot axis A4 is preferably parallel, or substantially parallel, with the first, second and third pivot axes A1, A2, A3. In preferred embodiments, the second, third and fourth axes A2, A3, A4 are arranged triangularly with respect to each other. In preferred embodiments, the location of the fourth pivot axis A4 (and therefore the location at which the second end 74 is coupled to the head section 22) is between the ends of the head section 22, preferably between the first pivot axis A1 and the second end 17. However, in alternative embodiments, the fourth pivot axis A4 may take other locations, e.g. such that the first pivot axis A1 is between the fourth pivot axis A4 and the end 17. The specific location of the pivot axis A4 may for example be selected depending on the geometry of the conveyor 16C and/or on its desired movement between the deployed and non-deployed states. The coupling of the second end 74 to the head section 22 may take any convenient conventional form, e.g. comprising one or more respective hinge or other pivot joint(s) or pivot coupling(s) or any other coupling(s) that allows pivoting, rotational swivelling movement.

The link means 70 may comprise any link structure or link device, and may for example comprise one or more instance of any one or more of a bar, a beam, a frame, a flexible line (e.g. wire(s), rope(s) or chain(s)), or any convenient combination thereof. In preferred embodiments, the link means 70 comprises a rigid, or substantially rigid, part coupled to the support 80 (or other base as applicable), and a non-rigid part (preferably a non-resiliently flexible part) coupled to the head section 22, or otherwise provided between the rigid part and the head section 22. The rigid part and non-rigid part may be coupled or connected together by any convenient means, e.g. a pin and eye connector or any other suitable connector(s). For example, in the embodiment of Figures 1 to 6, the link means 70 comprises a rigid bar 76 and first and second flexible lines 78A, 78B (e.g. chain(s), wire(s) and/or rope(s)). The first end 72 of the link means 70 is provided by the bar 76, and the second end of the link means 70 is provided by the flexible lines 78A, 78B, the bar 76 and lines 78A, 78B being fixed to each other between the ends 72, 74. In this example, a respective end of each line 78A, 78B is coupled to a respective side of the head section 22 to provide the coupling between the link means 70 and head section 22. Optionally, one or more length adjustment devices 79 may be provided for adjusting the length of the link means 70. For example, the, or each, flexible line 78A, 78B may be connected to the bar 76 by a respective length adjustor 79. Alternatively, the link means 70 may comprise only one or more flexible line, or only one or more rigid bar or other rigid structure(s). For example, in the embodiment of Figures 9 and 10 the link means 170 comprises only a rigid bar, or a pair of transversely spaced apart rigid bars.

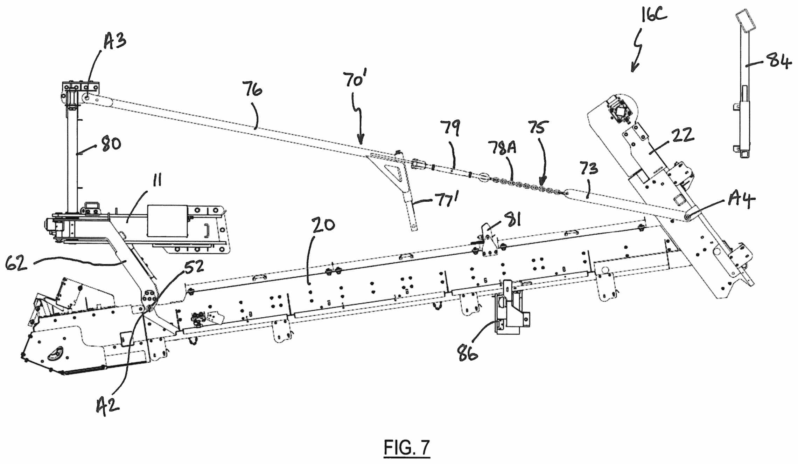

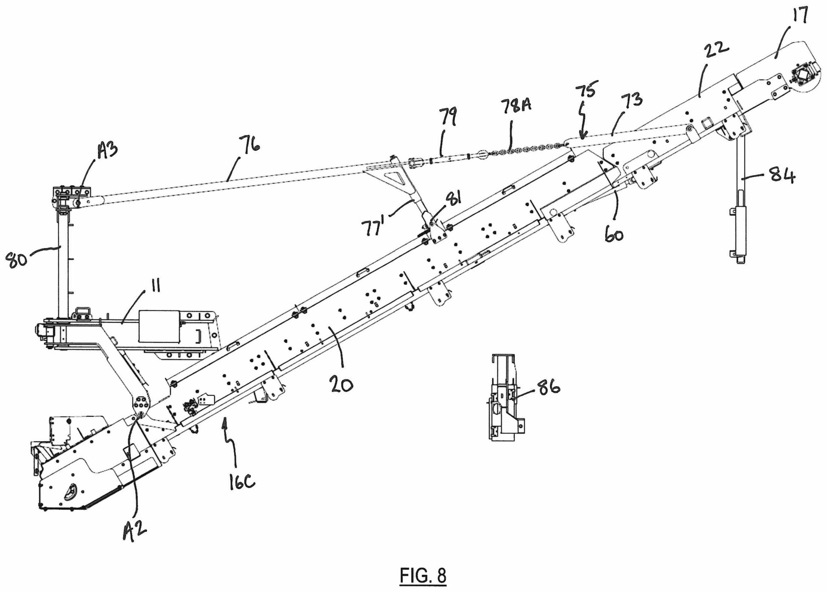

Figures 7 and 8 show an alternative embodiment of the conveyor 16C, which is the same as the embodiment of Figures 1 to 6 unless otherwise indicated and in respect of which like numerals are used to indicate line parts and the same or similar description applies. In the embodiment of Figures 7 and 8, the link means 70' includes a rigid, or substantially rigid, part 76 coupled to the support 80 (or other base as applicable), and which may comprise one or more rigid bar or other rigid structure(s). The link means 70' includes a second part 75 that is coupled between the rigid part 76 and the head section 22. The rigid part and second part 75 may be coupled or connected together by any convenient means, e.g. a pin and eye connector or any other suitable connector(s). The second part 75 includes a non-rigid part 78' (preferably a non-resiliently flexible part) which may comprise one or more flexible line 78A, 78B (e.g. one or more chain, wire and/or rope), and a rigid or semi-rigid part 73 (e.g. comprising one or more rigid or substantially rigid bar, plate or other member). The part 73 of the second part 75 is coupled to the head section 22 at pivot axis A4. The preferred arrangement of the link means 70', and in particular the second part 75, is such that the part 73 is laterally adjacent the head section 22 and the non-rigid part 78' is not laterally adjacent the head section 22. This arrangement may be achieved by suitable selection of the length of the part 73. This arrangement is advantageous is that it prevents the flexible part 78' from engaging with the head section 22 when moving between the deployed and non-deployed states, which is undesirable not least because it can increase wear on the conveyor 16C and link means 70'. In the example of Figures 7 and 8, the second part 75 of the link means 70' comprises first and second flexible lines 78A (only one visible), e.g. chain(s), wire(s) and/or rope(s), with a respective rigid or semi-rigid part 73 connected to an end of each flexible line (the other end of each flexible line typically being connected directly or indirectly to the rigid part 76). The first end 72 of the link means 70' is provided by the bar 76, and the second end of the link means 70' is provided by the parts 73, the bar 76 and lines 78A being fixed to each other between the ends 72, 74. In this example, a respective end of part 73 is coupled to a respective side of the head section 22 to provide the coupling between the link means 70' and head section 22.

In preferred embodiments, the link means 70, 70', 170 is of fixed length, at least during, or only during, movement of the conveyor 16C between the deployed and non-deployed states. In the case of the link means 170 of Figures 9 and 10, it is inherently of fixed length. In the case of the link means 70 shown in Figures 1 to 6, its length is inherently adjustable because of the inclusion of the flexible lines 78A, 78B, but in use the lines 78A, 78B are held in tension by the weight of the conveyor 16C such that the link means 70 maintains a fixed length during movement between the deployed and non-deployed states. Any length adjustment performed using the adjustment devices 79 is not performed during movement between the deployed and non-deployed states; instead it may be performed during set up or maintenance to fine tune the position of the conveyor 16C in the deployed and/or non-deployed states. The length of the link means 70, 70', 170 may be selected and/or adjusted to provide the desired position of the conveyor 16C in the deployed state.

Referring in particular to Figures 1, 5 and 7, it is advantageous to releasably fix the rigid part 76 of the link means 70, 70' to the base section 20 of the conveyor 16C when the conveyor 16C is in the deployed state, advantageously to maintain a fixed geometrical relationship between the base section 20 and the link means 70, 70'. For example, in the illustrated embodiments, the rigid part of the link means 70, 70' includes a rigid bar 77, 77', or other rigid locking part, that may be releasably fixed to a connector 81 provided on the base section 20, e.g. by means of one or more locking pin (not shown) or other releasable fixing that may be inserted in respective apertures 82A, 82B that align when the conveyor 16C is in the deployed state, or by any other releasable connector(s). For example, the bar 77, 77', or other locking part, may extend from the main part 76 of the link means 70, 70', typically obliquely or perpendicularly, in a direction towards the base section 20 and may be fixed to the main part 76 in any suitable manner (e.g. welding), optionally supported by a bracket. Maintaining a rigid or substantially rigid connection between the base section 20 and the link means 70, 70' serves to lock the conveyor 16C in the deployed state. For example, when the rigid part 76 is fixed to the base section 20, the non-rigid part 78A, 78B of the link member 70, 70' allows the head section 22 to pivot with respect to the base section 20, but such movement does not result in corresponding pivoting movement of the rigid part 76 or of the base section 20. This is advantageous in that it facilitates moving the conveyor 16C between the first and second modes of use. In particular, the head section 22 can be pivoted about axis A1 to engage and disengage with retainer 84 (described below) without having to adjust the angular disposition of the base section 20. Another advantage is that, should the actuator 60 be operated unintentionally or incorrectly when the base section 20 is locked in position, the non-rigid part of the link means 70. 70' allows the head section 22 to pivot about axis A1, thereby preventing any damage to the actuator 60, conveyor 16C or link means 70, 70' that may otherwise be caused if the link means 70, 70' were entirely rigid. When it is desired to operate the conveyor 16C to the non-deployed state, the interconnection of the base section 20 and the link means 70 is first released. Optionally, and as is illustrated in the embodiment of Figures 7 and 8, the bar 77', or other locking part of the link means 70', is extendible, e.g. telescopically or by any other configuration that allows its length to be adjusted. This arrangement facilitates locking the base section 20 in a range of different angular positions.

Referring still in particular to Figures 1, 5 and 7, when the conveyor 16C is in the deployed state it is preferably retained by one or more conveyor retainer 84, e.g. comprising a retaining post, cradle, rest or other retaining means. The, or each, conveyor retainer 84 may be provided on the body 11, or otherwise fixed with respect to the body 11. The, or each conveyor retainer 84 is preferably positioned to engage with and to retain the conveyor 16C, preferably at its head section 22. In particular, to facilitate the first and second modes of use, the conveyor 16C may be pivotable (by means of any suitable pivoting coupling(s)) at its feed end with respect to the main body of the apparatus 10 about an axis A5 that is typically vertical or substantially vertical in use. For example, in the illustrated embodiment, the supports 62, 80 may be rotatably or pivotably coupled to the body 11 (by any conventional means) so that they, and the conveyor 16C, can rotate or pivot about axis A5 that is vertical or substantially vertical in use). The preferred arrangement is such that when the conveyor 16C is in the deployed state and in the first mode of use (Figure 1), the retainer(s) 84 engage with the conveyor 16C to prevent it from swinging, or pivoting, outwardly from the body 11 about the axis A5, thereby preventing the conveyor 16C from pivoting out of the position required for the first mode towards the position required for the second mode.

Referring in particular to Figures 2 and 4, when the conveyor 16C is in the non-deployed state it is preferably supported by one or more conveyor support 86, e.g. in the form of a support post, cradle or rest. The, or each, conveyor support 86 may be provided on the body 11, or otherwise fixed with respect to the body 11, and preferably be positioned to engage with and to support the conveyor 16C, preferably at its base section 20.

The preferred operation of the conveyor 16C between the deployed and non-deployed states is now described. With the conveyor 16C in either one of the deployed state or the non-deployed state, operation of the actuator(s) 60 causes the head section 22 to pivot about axis A1 with respect to the base section 20 in response to which the link means 70 and the base section 20 pivot correspondingly about their respective pivot axis A2, A3. More particularly, in preferred embodiments, pivoting movement of the head section 22 causes the location at which the link means 70 is coupled to the head section 22 (i.e. the location of the further pivot axis A4) to move, which causes a corresponding pivoting movement of the link means 70 about axis A3, causing a corresponding pivoting movement of the base section 20 about axis A2. Depending on its angular direction, this pivoting, or angular, movement of the base section 20 corresponds to a raising or lowering of the base section 20, and therefore of the conveyor 16C. Accordingly, when operating the conveyor 16C between its deployed and non-deployed states, the action of the actuator(s) 60 causes not only pivoting, or folding, of the head section 22 with respect to the base section 20, but also a raising or lowering of the conveyor 16C. This is advantageous compared with other systems in which different sets of actuators are used to fold the head section and to raise or lower the conveyor. In particular, in preferred embodiments, the link means 70, 170 does not require and does not include any actuators.

This dual effect of the actuator(s) 60 is facilitated by the preferred arrangement of the base section 20, head section 22 and link means 70 as a pivotable linkage, whereby the base section 20 is pivotably coupled to the head section 22, the head section 22 is pivotably coupled to the link means 70, and the link means 70 and base section 20 are each pivotably coupled to a base (or a respective fixed base point), and wherein the respective pivotable couplings allow pivoting movement about a respective axis, the respective axes preferably being parallel or substantially parallel with each other.

Referring in particular to the embodiment of Figures 1 to 6, with the conveyor 16C in the deployed state (Figures 1, 5 and 6), operation of the actuator(s) 60 (i.e. extension of the actuator(s) 60 in this example) causes the head section 22 to pivot about axis A1 with respect to the base section 20 in an upward or rearward direction (anticlockwise as viewed in the drawings). The pivoting movement of the head section 22 causes the location of axis A4 to move (in a direction generally towards the axis A3 in this example), which causes the link means 70 to pivot correspondingly about axis A3 in a downward direction (clockwise as viewed in the drawings), thereby causing the base section 20 to pivot correspondingly about axis A2 in the downward direction (clockwise as viewed in the drawings). More particularly, the movement of the axis A4 reduces the tension in the link means 70, which allows the link means 70 to pivot downwardly about axis A3 under the weight of the conveyor 16C. The angular extent to which the head section 22 pivots, and therefore to which the conveyor 16C is lowered, may be determined by the extent to which the actuator(s) 60 extend, and/or by engagement of the stops 57A, 57B. Hence, the conveyor 16C is operated from the deployed state to the non-deployed state by the action of the actuator(s) 60.

Still referring in particular to the embodiment of Figures 1 to 6, with the conveyor 16C in the non-deployed state (Figures 2, 3 and 4), operation of the actuator(s) 60 (i.e. retraction of the actuator(s) 60 in this example) causes the head section 22 to pivot about axis A1 with respect to the base section 20 in a forward direction (clockwise as viewed in the drawings). The pivoting movement of the head section 22 causes the location of axis A4 to move (in a direction generally away from the axis A3 in this example), which causes the link means 70 to pivot correspondingly about axis A3 in an upward direction (anticlockwise as viewed in the drawings), thereby causing the base section 20 to pivot correspondingly about axis A2 in the upward direction (anticlockwise as viewed in the drawings). More particularly, the movement of the axis A4 increases the tension in the link means 70, which causes the link means 70 to pivot upwardly about axis A3 and to lift the conveyor 16C. The angular extent to which the head section 22 pivots, and therefore to which the conveyor 16C is raised, may be determined by the extent to which the actuator(s) 60 extend, and/or by engagement of the stops 56A, 56B. Hence, the conveyor 16C is operated from the non-deployed state to the deployed state by the action of the actuator(s) 60.

Figures 9 and 10 illustrate an alternative embodiment which is the same or similar to the embodiment of Figures 1 to 6 and in which like numerals are used to denote like parts and to which the same or similar description applies unless otherwise indicated. In this embodiment, the link means 170 comprises a rigid bar, or a plurality of transversely spaced apart rigid bars. The pivot axis A3 is located below the conveyor 16C, in particular below the head section 22, and is preferably also located forwardly of the pivot axis A4 (in contrast to the embodiment of Figures 1 to 6 in which the pivot axis A3 is located rearwardly and above the pivot axis A4). With the conveyor 16C in the deployed state (Figure 8), operation of the actuator(s) 60 (i.e. extension of the actuator(s) 60 in this example) causes the head section 22 to pivot about axis A1 with respect to the base section 20 in an upward or rearward direction (anticlockwise as viewed in the drawings). The pivoting movement of the head section 22 causes the location of axis A4 to move (in a direction generally away from the axis A3 in this example), which causes the link means 170 to pivot correspondingly about axis A3 in a downward direction (anticlockwise as viewed in Figures 9 and 10), thereby causing the base section 20 to pivot correspondingly about axis A2 in a downward direction (clockwise as viewed in Figures 9 and 10). The angular extent to which the head section 22 pivots, and therefore to which the conveyor 16C is lowered, may be determined by the extent to which the actuator(s) 60 extend, and/or by engagement of the stops 57A, 57B. Hence, the conveyor 16C is operated from the deployed state to the non-deployed state by the action of the actuator(s) 60. With the conveyor 16C in the non-deployed state (Figure 9), operation of the actuator(s) 60 (i.e. retraction of the actuator(s) 60 in this example) causes the head section 22 to pivot about axis A1 with respect to the base section 20 in forward direction (clockwise as viewed in Figures 9 and 10). The pivoting movement of the head section 22 causes the location of axis A4 to move (in a direction generally towards the axis A3 in this example), which causes the link means 170 to pivot correspondingly about axis A3 in an upward direction (clockwise as viewed in Figures 9 and 10), thereby causing the base section 20 to pivot correspondingly about axis A2 in an upward direction (anticlockwise as viewed in Figures 9 and 10). The angular extent to which the head section 22 pivots, and therefore to which the conveyor 16C is raised, may be determined by the extent to which the actuator(s) 60 extend, and/or by engagement of the stops 56A, 56B. Hence, the conveyor 16C is operated from the deployed state to the non-deployed state by the action of the actuator(s) 60.

In the illustrated embodiments, the conveyor 16C is installed on the apparatus 10, and the associated components with which the conveyor 16C is co-operable, such as the conveyor support structure 62, the link support structure 80 and the conveyor supports 84, 86, are conveniently provided on the apparatus 10, in particular on the body or chassis 11. As such, the apparatus 10, and in particular its body or chassis 11, serves as a base on which the conveyor 16C is installed and with respect to which it operates as described herein. It will be understood that the invention is not limited to use with apparatus 10 of the type described herein, and embodiments of the invention may comprise alternative bases, e.g. any apparatus, machine, vehicle or plant that require such a conveyor, or stand-alone conveyor apparatus, e.g. comprising one or more conveyor mounted on a base, chassis or other support structure (e.g. of types commonly referred to as radial conveyors or stacking conveyors). From one aspect therefore the invention provides a conveyor assembly comprising the conveyor 16C and a base, wherein the base may be provided by the apparatus 10 or any other suitable apparatus, machine, vehicle, plant, frame or structure(s) depending on the application, and the conveyor 16C may be installed on, and operated with respect to, the base in the same or similar manner as described herein with respect to the apparatus 10 as would be apparent to a skilled person.

It will be understood that, in alternative embodiments, the angular direction in which the head section 22 pivots when moving between the deployed and non-deployed states and/or the angular direction in which the base section 20 pivots when moving between the deployed and non-deployed states, may differ from those described and illustrated herein depending on the requirements of the application. For example, with reference to Figure 5, the arrangement may be such that the head section 22 pivots downwards (clockwise as viewed in Figure 5) when the conveyor is operated from the deployed state to the non-deployed state, and/or that the base section 20 pivots upwards (anticlockwise as viewed in Figure 5) when the conveyor is operated from the deployed state to the non-deployed state. The manner in which the components of the conveyor 16C, in particular the base section 20, head section 22 move, and in which the link means 70, 70', 170 moves, may be determined by suitable configuration of the conveyor assembly, including suitable configuration of any one or more of the following: the location of any one or more of the axes A2, A3 and A4 with respect to the location of any one or more other of the axes A2, A3, A4; the location of any one or more of the axes A2, A3 and A4 with respect to the axis A1; the location and/or direction of the line of action of the actuator(s) 60 with respect to the axis A1; the location of the axis A1 with respect to the base section 20 and/or the head section 22; the length of travel of the actuator(s) 60, and so on. In determining these aspects of the assembly, other aspects of the assembly may be taken into account as required including: the force exerted by the actuator(s) 60; the desired angular disposition of conveyor sections 20, 22 in the deployed and non-deployed states; the lengths of the conveyor sections 20, 22; the length of the link means 70, 70', 170; the weight of the conveyor sections 20, 22 and so on.

For example, for any given embodiment, once it is decided how the conveyor sections 20, 22 are desired to move during operation of the conveyor 16C between the deployed and non-deployed states, the relative locations of the axis A1, A2, A3 and A4, and the location and direction of the line of action (or line of force) of the actuator(s) 60 with respect to the axis A1 are determined accordingly, which determination may involve determining in particular how the location of the axis A4 moves with respect to the location of the axis A3 in response to operation of the actuator(s) 60. In preferred embodiments, the arrangement is such that the line of action, or line of force, of the actuator(s) 60 is located on the same side (below in the illustrated embodiments) of the pivot axis A1 throughout the pivoting movement of the head section 22 as the conveyor 16C moves between the deployed and non-deployed states. This arrangement is advantageous in that (as is the case in the illustrated embodiments) it allows the actuator(s) 60 to be connected to the head section 22 directly or otherwise without intermediate lever(s) and/or linkage(s) that would otherwise be required to allow the line of action to change which side of the pivot axis A1 it acts on during pivoting of the head section 22. This arrangement is facilitated in preferred embodiments by the location of the pivot axis A1, preferably by locating the pivot axis below the top face of the conveyor 16C as described above and/or by locating the pivot axis A1 forwardly of the proximal end 22 of the base section 20 as described above. The design of the conveyor assembly may be achieved in any conventional manner, e.g. by computer simulation or computer modelling and/or empirically.

The invention is not limited to the embodiment(s) described herein but can be amended or modified without departing from the scope of the present invention.

## Claims

1. A conveyor assembly comprising:
a base;
a conveyor having a base section and a head section, the head section being pivotable with respect to the base section about a first axis, the base section being pivotable with respect to the base about a second axis that is spaced apart from the first axis;
link means coupled between the base and the head section and being pivotable with respect to the base about a third axis and pivotable with respect to the head section about a fourth axis, the third and fourth axes being spaced apart from each other and from the first and second axes; and
actuating means operable to pivot one of the head section, the base section or the link means about the first, second or third axis respectively,
the conveyor assembly being configured such that, in response to pivoting of said one of the head section, the base section or the link means by said actuating means, the others of the head section, the base section and the link means pivot about the first, second or third axis respectively.

2. The conveyor assembly of claim 1, wherein the actuating means is operable to pivot the head section with respect to the base section about the first pivot axis, and wherein in response to pivoting of the head section by said actuating means, the link means and the base section are caused to pivot about the third and second axis, and wherein, preferably, said actuating means being coupled between said base section and said head section, preferably such that a line of action of said actuating means spaced apart from, and is located at only one side of, said first pivot axis during pivoting of the head section with respect to the base section about the first pivot axis.

3. The conveyor assembly of any preceding claim, wherein the base section is pivotably coupled to the head section, the head section is pivotably coupled to the link means, and the link means and base section are each pivotably coupled to the base, whereby the base section, head section and link means preferably form a pivotable linkage, and wherein the respective pivotable inter-coupling of the base section, head section and link means causes or allows pivoting movement of said others of the head section, the base section and the link means pivot about the first, second or third axis respectively in response to pivoting of said one of the head section, the base section or the link means by said actuating means.

4. The conveyor assembly of any preceding claim, wherein the conveyor is operable between a deployed state and a non-deployed state, and wherein in the deployed state the head section adopts a first angular disposition with respect to the base section, and the base section adopts a first angular disposition with respect to the base, and wherein in the non-deployed state the head section adopts a second angular disposition with respect to the base section, and the base section adopts a second angular disposition with respect to the base, the respective first and second angular dispositions being different from each other, and wherein the conveyor is operable between the deployed and non-deployed states by said pivoting of said one of the head section, the base section or the link means by said actuating means, and wherein, preferably, the conveyor is operable between the deployed and non-deployed states by said pivoting of the head section by the actuation means.

5. The conveyor assembly of any preceding claim, wherein said second, third and fourth axes are triangularly spaced apart; and/or said first axis is located between said second axis and said fourth axis, and/or between said third axis and said fourth axis; and/or said third axis is located above said second axis, and is preferably located over the base section, more preferably in register or substantially in register with a first end of the base section, said first end being distal said head section; and/or said third axis is located under the head section; and/or said second and third axes are parallel, or substantially parallel, with each other; and/or said first and fourth axes are parallel, or substantially parallel, with each other, and wherein the first and fourth axes are preferably parallel, or substantially parallel, with said second and third axes.

6. The conveyor assembly of any preceding claim, wherein the link means is of fixed length, at least during, or only during, pivoting movement of said others of the head section, the base section and the link means pivot about the first, second or third axis respectively in response to pivoting of said one of the head section, the base section or the link means by said actuating means.

7. The conveyor assembly of any preceding claim when dependent on claim 5, wherein the link means is of fixed length, at least during, or only during, operation of the conveyor between the deployed and non-deployed states.

8. The conveyor assembly of any preceding claim, wherein the link means comprises a rigid part and a second part, the rigid part being coupled to the base and the second part being coupled to the head section, wherein the second part comprises a non-rigid part, the non-rigid part being coupled directly or indirectly to the head section, and wherein the rigid part optionally comprises one or more instance of any one or more of a bar, a beam, or a frame, and the non-rigid part optionally comprises one or more flexible line, e.g. one or more rope, chain or wire.

9. The conveyor assembly of claim 8, wherein the second part of the link means includes a rigid or semi-rigid part coupled to the head section, the non-rigid part being coupled between said rigid or semi-rigid part of the second part and said rigid part of the link means, and wherein said rigid or semi-rigid part of the second part optionally comprises one or more bar, plate or other member.

10. The conveyor assembly of claim 8 or 9, wherein the rigid part of the link means is releasably fixable to the base section, preferably when the conveyor is in the deployed state, conveniently by one or more locking device or other releasable fixing device(s).

11. The conveyor assembly of claim 10, wherein the rigid part of the link means includes a locking part that is releasably fixable to the base section, and wherein said locking part is optionally extendible, for example being telescopically extendible or otherwise configured to be length adjustable.

12. The conveyor assembly of any preceding claim, further including one or more length adjustment devices for adjusting the length of the link means.

13. The conveyor assembly of claim 4 or any other claim when dependent on claim 5, wherein said head section is configured to pivot about said first axis in a first angular direction during operation of said conveyor from the deployed state to the non-deployed state, and in a second angular direction during operation of said conveyor from the non-deployed state to the deployed state, the second angular direction being opposite the first angular direction, and wherein, preferably, pivoting of the head section in the first angular direction involves movement of the head section in an upward direction, and pivoting of the head section in the second angular direction involves movement of the head section in a downward direction; and/or wherein said base section is configured to pivot about said second axis in a first angular direction during operation of said conveyor from the non-deployed state to the deployed state, and in a second angular direction during operation of said conveyor from the deployed state to the non-deployed state, the second angular direction being opposite the first angular direction, and wherein, preferably, pivoting of the base section in the first angular direction involves movement of the base section in an upward direction, and pivoting of the base section in the second angular direction involves movement of the base section in a downward direction.

14. The conveyor assembly of any preceding claim, wherein the conveyor is pivotable with respect to the base about an axis that is preferably vertical or substantially vertical in use and which is preferably located at or adjacent an end of the conveyor, preferably such that the conveyor is pivotable with respect to the body between a first disposition in which it extends alongside the base, and a second disposition in which it projects outwardly from the base.

15. A material processing apparatus comprising a conveyor assembly as claimed in any preceding claim, wherein said material processing apparatus, conveniently a body of the material processing apparatus, provides or incorporates the base of the conveyor assembly, and wherein, preferably, the conveyor is pivotable with respect to the material processing apparatus, in particular with respect to the body of the material processing apparatus, between a disposition in which, in the deployed state, the conveyor is arranged to convey material between first and second locations on the material processing apparatus, and a different disposition in which, in the deployed state, the conveyor is arranged to convey material from a location on the material processing apparatus to an external location off the material processing apparatus, or to convey material from an external location off the material processing apparatus to a location on the material processing apparatus.
